# EUROPEAN PATENT SPECIFICATION

(11) **EP 3 636 521 B1**
(45) Date of publication and mention of the grant of the patent: **29.06.2022**
(21) Application number: 19202605.2
(22) Date of filing: 10.10.2019
(51) Int. Cl.: B62H 3/04

(54) **BICYCLE STAND**
FAHRRADSTÄNDER
SUPPORT DE VÉLO

(30) Priority: 10.10.2018 NL 2021792
(43) Date of publication of application: 15.04.2020
(73) Proprietor: Kooymans Beheer B.V., 4285 BG Woudrichem (NL)
(72) Inventor: BUKKEMS, Stefan Gerardus Maria, 5223LP 's Hertogenbosch (NL)
(74) Representative: Verhees, Godefridus Josephus Maria

(56) References cited:
- CN-U- 209 723 750
- JP-U- S58 188 280
- KR-U- 20110 002 427
- US-A- 4 306 660
- US-A1- 2016 200 140
- US-B1- 6 257 419

## Description

### Technical field of the invention

The invention relates to a bicycle stand according to independent claim 1.

From the side where the threshold is located the bicycle stand is accessible by a bicycle to place the bicycle in a parked position.

### Background of the invention

A bicycle stand according to the preamble of claim 1 is known from US2016/200140A1. From EP2646311A a bicycle stand is known that has a wheel support surface and two support elements, which are positioned higher than the wheel support surface, for supporting a front fork of the bicycle in the parked position. The support elements are placed at an angle with respect to each other such that, viewed from above, a substantially converging receiving opening for the front fork of the bicycle is formed between the support elements. If a luggage carrier is at the front of the bicycle, it is usually connected to the wheel axle of the front wheel. As a result, the front fork of the bicycle is not accessible from the front, so that the known bicycle stand is not suitable for such a bicycle. The known bicycle stand is also not suitable for bicycles where the front fork is not accessible for other reasons.

### Summary of the invention

An object of the invention is to provide a bicycle stand of the type described in the preamble which is also suitable for bicycles in which the front fork is not accessible from the front. For this purpose, the bicycle stand according to the invention is characterized in that each wheel axle carrier comprises one of the wheel axle contact surfaces and the wheel axle contact surfaces of both wheel axle carriers face each other and diverge in upward direction. The ends of the wheel axle are always accessible from the front. By allowing the wheel axle contact surfaces to converge, each wheel axle with current length can be fixed between the wheel axle contact surfaces. This makes the bicycle stand suitable for all bicycles, including those where the front fork is protected by a luggage rack or otherwise (for example, by accessories attached to the front fork).

The distance between the wheel threshold and the part of the wheel axle contact surfaces that is the furthest from the wheel threshold is smaller than or equal to 450 mm, so that all wheel sizes smaller than 29 inches will be supported by the wheel axle contact surfaces.

Furthermore, the legs of the wheel catch fork preferably extend downwards towards each other and the wheel threshold is present at a distance from the legs. As a result, a wheel is not only confined at the location of the wheel threshold and the wheel axle contact surfaces, but also at a location between the legs of the wheel catching fork, so that the wheel is better locked in the bicycle stand and the tilting of the wheel is minimized.

In order to be able to fix the wheel even better in the bicycle stand, the wheel threshold is preferably V-shaped, wherein the wheel threshold is oriented with the point of the V-shape directed away from the upper ends of the legs.

In order to prevent scratches on the ends of the wheel axles, the wheel axle contact surfaces are preferably provided with a soft scratch-resistant top layer.

### Brief description of the drawings

The invention will be explained in more detail below with reference to an exemplary embodiment of the bicycle stand according to the invention shown in the drawings, in which:
Figure 1 shows an embodiment of the bicycle stand according to the invention in perspective;
Figure 2 shows the bicycle stand in front view; and
Figure 3 shows the bicycle stand in side view.

### Detailed description of the drawings

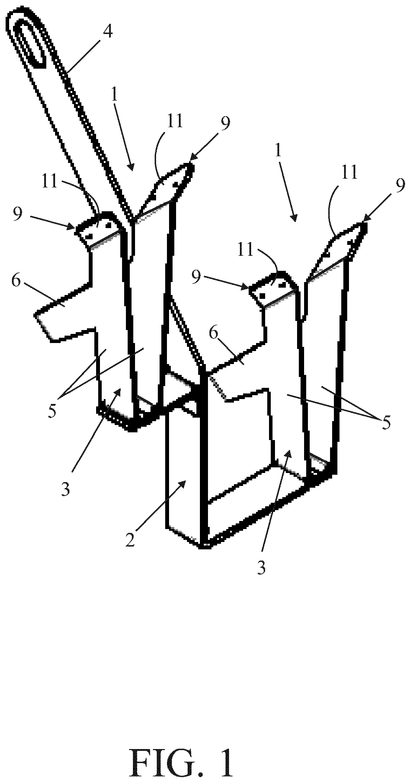

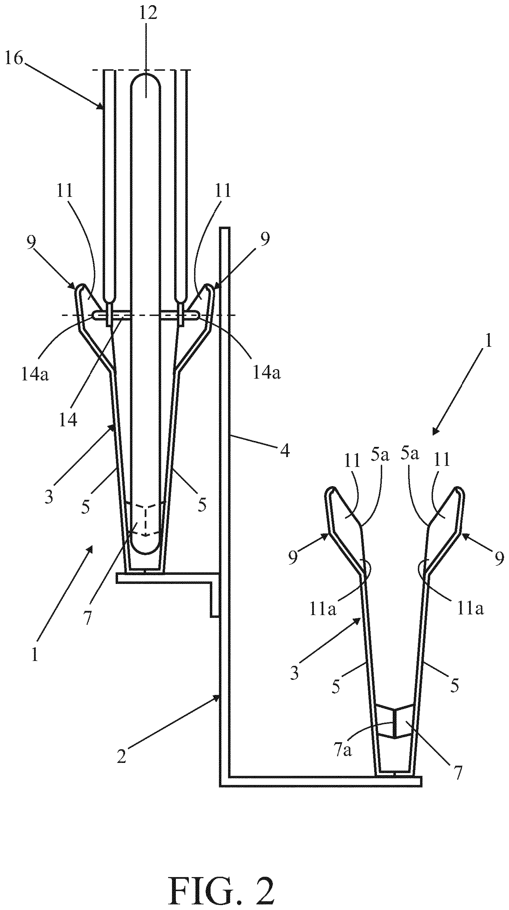

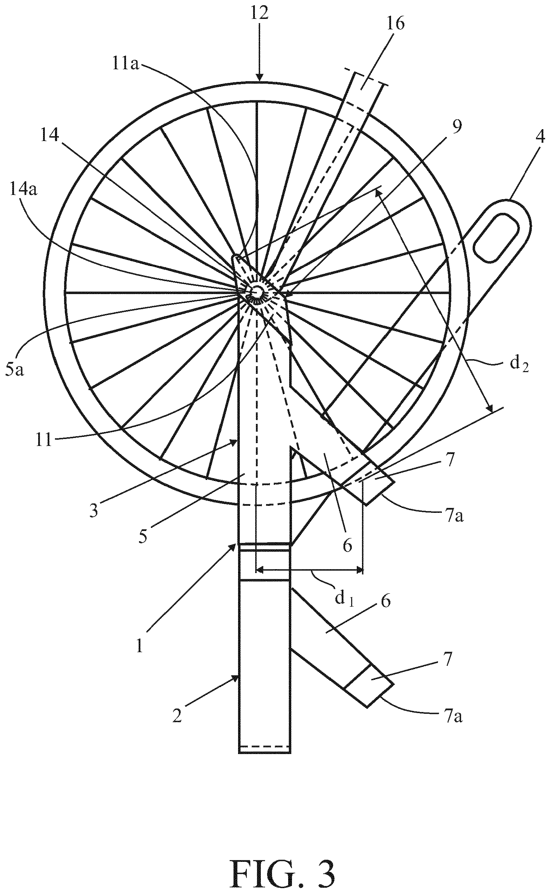

Figures 1-3 show a bicycle rack with two bicycle stands according to the invention in various views. The bicycle rack has a frame 2 on which the bicycle stands 1 are attached at or not at different levels. Attached to the frame 2 is a connecting bracket 4 to which a parked bicycle with a chain or otherwise can be fixed.

Each bicycle stand 1 has a wheel-catching fork 3 with two legs 5, which are spaced apart from one another and extend upwards. These legs 5 extend towards each other in downward direction. A wheel 12 of a bicycle is present in one of the wheel catch forks (not shown in Figure 1).

Two parallel arms 6 are attached to both legs 5 of each wheel-catching fork 3. The ends of these arms are turned over and form a V-shaped wheel threshold 7 that tapers. The wheel threshold is directed with the point 7a of the V-shape from the upper ends 5a of the legs 5.

The wheel threshold 7 is at a distance d1 from the legs and is furthermore in the horizontal direction at a distance from the upper ends 5a of the legs. Wheel axle carriers 9 are provided at these upper ends 5a of the legs 5 of the wheel catching fork 3 which are provided with wheel axle contact surfaces 11 facing each other.

In the case of a bicycle, these wheel axle contact surfaces are in contact with the ends 14a of the wheel axle 14 of the bicycle. These wheel axle contact surfaces 11 diverge in upward direction and extend upwards in a direction away of the wheel threshold 7.

The distance d2 between the wheel threshold 7 and the furthest part of the wheel threshold part 11a of the wheel axle contact surfaces 11 is 450 mm, so that the bicycle stand is suitable for bicycles with a wheel equal to or smaller than 29 inches.

To prevent damage to the ends 14a of the wheel axle 14, the wheel axle contact surfaces 11 are provided with a soft scratch-resistant top layer.

When a bicycle is parked, the front wheel 12 is placed over the wheel threshold 7. This way the wheel wants to move forward. The wheel axle 14 herein becomes jammed between the two oblique wheel axle contact surfaces 11. The front wheel 12 can now no longer move forward. In order to prevent the front wheel from rocking, the tire of the wheel is caught between the legs 5 of the wheel catching fork 3 which extend towards each other.

The bicycle stand 1 is composed of parts that are all demountably connected to each other by means of. bolts / nuts, rivets, etc. This allows the parts to be replaced at any time and to be fully reused.

Although the present invention is elucidated above on the basis of the given drawings, it should be noted that this invention is not limited whatsoever to the embodiments shown in the drawings. The invention also extends to all embodiments deviating from the embodiments shown in the drawings within the scope of the invention defined by the appended claims.

## Claims

1. Bicycle stand (1) comprising:
- a wheel catch fork (3) with two spaced upward protruding legs (5) between which a wheel (12) of a bicycle can be placed,
- a wheel threshold (7) which in horizontal direction is at a distance from the upper ends (5a) of the legs, and
- wheel axle carriers (9) provided at the upper ends (5a) of the legs (5) of the wheel catching fork (3), which carriers are provided with wheel axle contact surfaces (11) which, in case of a stalled bicycle, are in contact with ends (14a) of the wheel axle (14) of the bicycle, and in a direction away from the wheel threshold (7) the wheel axle contact surfaces (11) extend upwards,
**characterized in that** each wheel axle carrier (9) comprises one of the wheel axle contact surfaces (11) and the wheel axle contact surfaces (11) of both wheel axle carriers (9) face each other and diverge in upward direction.

2. Bicycle stand according to claim 1, **characterized in that** the distance (d2) between the wheel threshold (7) and the part (11a) of the wheel axle contact surfaces (11) located the furthest from the wheel threshold is less than or equal to 450 mm.

3. Bicycle stand according to claim 1 or 2, **characterized in that** the legs (5) of the wheel catch fork (3) converge in downwards direction and that the wheel threshold (7) is present at a distance (d1) from the legs.

4. Bicycle stand according to any one of the preceding claims, **characterized in that** the wheel threshold (7) is V-shaped, the point (7a) of the V-shape is directed away from the upper ends (5a) of the legs (5).

5. Bicycle stand according to any one of the preceding claims, **characterized in that** the wheel axle contact surfaces (11) are provided with a soft scratch-preventing top layer.

## Patentansprüche

1. Fahrradständer (1) umfassend:
- eine Radfanggabel (3) mit zwei beabstandeten, nach oben vorstehenden Schenkeln (5), zwischen denen ein Laufrad (12) eines Fahrrads platzierbar ist,
- eine Radschwelle (7), die in horizontaler Richtung von den oberen Enden (5a) der Beine beabstandet ist, und
- an den oberen Enden (5a) der Schenkel (5) der Radfanggabel (3) vorgesehene Radachsenträger (9), die mit Radachsenkontaktflächen (11) versehen sind, die im Falle eines stehengebliebenen Fahrrades, mit Enden (14a) der Radachse (14) des Fahrrads in Kontakt stehen und sich die Radachsenkontaktflächen (11) in einer Richtung weg von der Radschwelle (7) nach oben erstrecken,
**dadurch gekennzeichnet, dass** jeder Radachsenträger (9) eine der Radachsenkontaktflächen (11) aufweist und die Radachsenkontaktflächen (11) beider Radachsenträger (9) einander zugewandt sind und nach oben divergieren.

2. Fahrradständer nach Anspruch 1, **dadurch gekennzeichnet, dass** der Abstand (d2) zwischen der Radschwelle (7) und dem am weitesten von der Radschwelle entfernten Teil (11a) der Radachsenkontaktflächen (11) weniger oder gleich ist als 450 mm.

3. Fahrradständer nach Anspruch 1 oder 2, **dadurch gekennzeichnet, dass** die Schenkel (5) der Radfanggabel (3) nach unten konvergieren und dass die Radschwelle (7) in einem Abstand (d1) von den Schenkeln vorhanden ist.

4. Fahrradständer nach einem der vorhergehenden Ansprüche, **dadurch gekennzeichnet, dass** die Radschwelle (7) V-förmig ist, wobei die Spitze (7a) der V-Form von den oberen Enden (5a) der Beine weg gerichtet ist (5).

5. Fahrradständer nach einem der vorangehenden Ansprüche, **dadurch gekennzeichnet, dass** die Radachsenkontaktflächen (11) mit einer weichen kratzfesten Oberschicht versehen sind.

## Revendications

1. Support à vélo (1) comprenant :
- une fourche d'accrochage de roue (3) avec deux jambes (5) saillantes vers le haut espacées entre lesquelles une roue (12) d'une bicyclette peut être placée,
- un seuil de roue (7) qui dans la direction horizontale est à distance des extrémités supérieures (5a) des jambes, et
- des supports d'axe de roue (9) prévus aux extrémités supérieures (5a) des jambes (5) de la fourche d'accrochage de roue (3), lesquels supports sont pourvus de surfaces de contact d'axe de roue (11) qui, dans le cas d'un vélo en panne , sont en contact avec des extrémités (14a) de l'axe de roue (14) de la bicyclette, et dans une direction s'éloignant du seuil de roue (7), les surfaces de contact d'axe de roue (11) s'étendent vers le haut,
**caractérisé en ce que** chaque support d'axe de roue (9) comprend l'une des surfaces de contact d'axe de roue (11) et les surfaces de contact d'axe de roue (11) des deux supports d'axe de roue (9) se font face et divergent vers le haut.

2. Support à vélo selon la revendication 1, **caractérisé en ce que** la distance (d2) entre le seuil de roue (7) et la partie (11a) des surfaces de contact d'axe de roue (11) située la plus éloignée du seuil de roue est inférieure ou égale à 450 mm.

3. Support de vélo selon la revendication 1 ou 2, **caractérisé en ce que** les jambes (5) de la fourche de rattrapage de roue (3) convergent vers le bas et que le seuil de roue (7) est présent à une distance (d1) des pattes .

4. Support à vélo selon l'une quelconque des revendications précédentes, **caractérisé en ce que** le seuil de roue (7) est en forme de V, la pointe (7a) de la forme en V est dirigée à l'opposé des extrémités supérieures (5a) des jambes (5).

5. Support de vélo selon l'une quelconque des revendications précédentes, **caractérisé en ce que** les surfaces de contact d'axe de roue (11) sont pourvues d'une couche supérieure anti-rayures souple.
